# EUROPEAN PATENT APPLICATION

(11) **EP 4 840 633 A1**
(43) Date of publication of application: **18.11.2026**
(21) Application number: 26177864.1
(22) Date of filing: 11.05.2026
(51) Int. Cl.: B32B 37/04, B29C 51/02, B29C 69/00, B29D 16/00, B32B 37/02, B32B 37/06

(54) **PROCESS AND PLANT FOR THE PRODUCTION OF A LAMINATE**

(30) Priority: 16.05.2025 IT 202500011118
(71) Applicant: Mech I Tronic S.r.l., 15121 Alessandria (IT)
(72) Inventor: Passoni, Ferdinando, 15121 Alessandria (IT); Sardella, Claudio, 15121 Alessandria (IT)
(74) Representative: Perani & Partners S.p.A.

(57) **Abstract**

A process for the production of a laminate (100) comprising a first and a second layer (101, 102) spaced apart along a thickness direction (S-S), and a third embossed layer (103) coupled from opposite sides along the thickness direction (S-S) to the first and the second layer (102). Said process comprises the steps of:
A) feeding a first and a second sheet (1, 2) made of thermoplastic polymeric material, respectively intended to form the first and the second layer (101, 102) of the laminate (100),
B) feeding a third sheet (3) intended to form the third layer (103) of the laminate (100), made of thermoplastic polymeric material heat-sealable to the first and the second sheet (1, 2), and having first and second embossments (31, 32) on opposite faces,
C) coupling the first and the second sheet (1, 2) from opposite sides of the third sheet (3), by heat-sealing the first sheet (1) to the first embossments (31) and the second sheet (2) to the second embossments (32), said coupling step comprising the sub-steps of:
C1) heating the first, the second and the third sheet (3) to a sealing temperature (TS) adapted to allow heat-sealing operations,
C2) contacting the first sheet (1) with the first embossments (31) of the third sheet (3) to heat-seal the first sheet (1) to the third sheet (3),
C3) contacting the second sheet (2) with the second embossments (32) of the third sheet (3) to heat-seal the second sheet (2) to the third sheet (3).

A characteristic of the present invention is the fact that the heating sub-step C1) is divided into a first heating sub-step C1.1), in which each sheet (1, 2, 3) is brought to an intermediate temperature (TI) between the temperature at which it is fed and the sealing temperature (TS), and a subsequent second heating sub-step C1.2), in which each sheet (1, 2, 3) is further heated to reach the sealing temperature (TS). [Figura 2]

## Description

### Technical Field

The present invention relates to a process and a plant for the production of a laminate made of thermoplastic polymeric material which finds useful application in various industrial sectors, including that of the production of semi-finished products in plastic material, such as, for example, sheets and honeycomb panels.

### State of the Art

Honeycomb panels and sheets made of polypropylene have long been known which, thanks to their low weight/stiffness ratio, are widely used in all those applications that require the supply of light structures with good mechanical properties.

The Italian patent N. 102015000022842 describes a honeycomb sandwich panel based on thermoplastic polypropylene, having a structure consisting of two flat outer films heat-sealed to an internal film thermoformed with bubbles on both faces (embossed film).

The process of heat-sealing the outer films to the inner film has several critical issues. For a correct heat-sealing of the films, it is in fact necessary to ensure that, when they come into contact, the films are at the sealing temperature of the polymeric material used or in a narrow range thereof. An insufficient temperature can prevent the adequate fusion of the materials, while an excessive temperature can degrade the polymers, altering their mechanical properties. It is therefore essential that, during heat-sealing, the polymeric films are in the correct temperature window to ensure the mechanical properties of the honeycomb panel and to avoid undesirable delamination phenomena.

In light of these critical issues and in consideration of the practical difficulties in continuously feeding polymeric films in a narrow temperature window, the Italian patent N. 102015000022842 proposes to make each film by means of three co-extruded layers. By appropriately selecting the chemical composition of the interface layers between the outer and inner films, it is in fact possible to significantly improve their sealability, widening the operating temperature window.

The solution adopted in patent N. 102015000022842 is not, however, free from drawbacks since, in addition to complicating the production process by requiring the use of co-extruded multi-layer films, it only partially solves the aforementioned critical issues. In fact, although with an accurate section of the interface layers of the films to be heat-sealed it is possible to slightly widen the sealability temperature window, the difficulties of continuously feeding the films in this temperature window still remain.

It is also worth noting that the known production processes for honeycomb panels do not allow for the appropriate control of the deformations and stretching of the material during the heating phase. This could lead to the formation of internal stresses and therefore undesirable residual deformations in the final product.

In the sector of the production of polymeric semi-finished products, the need is therefore felt for simple processes and plants for the production of laminates having an interposed embossed layer heat-sealed to two outer layers, capable of reducing/eliminating the problems of delamination and/or residual deformations found in existing solutions.

There is also a felt need for flexible processes and plants capable of operating also with polymeric materials other than polypropylene, in order to broaden the range of applications and improve the performance of the laminates obtained.

### Object of the Invention

In this context, the technical task underlying the present invention is to propose a process and a plant for the production of a laminate in polymeric material, in particular of the thermoplastic type, which overcomes the drawbacks of the known art mentioned above.

In particular, an object of the present invention is to provide a process and a plant for the production of laminates having an intermediate embossed layer heat-sealed to two outer layers, capable of reducing/eliminating the problems of delamination and/or residual deformations found in existing solutions.

A further object of the present invention is to provide a process and a plant for the production of laminates having an intermediate embossed layer heat-sealed to two outer layers, which allow the use of a wide variety of polymeric materials, overcoming the limitations to only polypropylene provided for in Italian patent no. 102015000022842.

It is also an object of the present invention to provide a process and a plant for the production of laminates having an intermediate embossed layer heat-sealed to two outer layers, in which said layers can be indifferently either co-extruded or mono-extruded.

### SUMMARY OF THE INVENTION

In accordance with the present invention, the indicated technical task and the specified objects are achieved by a plant for the production of a laminate in polymeric material according to one or more of the claims reported below.

In particular, the present invention proposes to divide the heating of the thermoplastic polymeric sheets used for making the laminate into two sub-steps: a first sub-step in which each sheet is brought to an intermediate temperature, comprised between the initial feeding temperature and the sealing temperature, and a second sub-step in which the temperature of the sheets is further raised to reach the sealing temperature.

The lower thermal gradient obtained by means of a heating articulated in two sub-steps allows a more precise control of the temperature of the sheets to be heat-sealed. This makes it possible to center with greater precision the narrow temperature window required for heat-sealing. Consequently, the process object of the present invention allows to carry out high-quality heat-seals, significantly reducing the risk of delamination of the laminate.

The better control of the temperature of the sheets during the heat-sealing processes also makes it possible to broaden the range of thermoplastic polymeric sheets that can be used for making the laminate, both in the choice of materials and in their structure. In particular, it allows the use of both mono-extruded and co-extruded sheets, as well as thermoplastic polymeric materials other than polypropylene.

The heating in two successive sub-steps is also advantageous as it allows for better control of the deformations and stretching of the sheets during the heating phase, thus minimizing the risk of generating internal stresses that transform into undesirable residual deformations in the final laminate.

### BRIEF DESCRIPTION OF THE DRAWINGS

Further characteristics and advantages of the present invention will appear more clearly from the indicative, and therefore non-limiting, description of a preferred but not exclusive embodiment of a plant for the production of a laminate in polymeric material, as illustrated in the accompanying drawings in which:
- Figure 1 shows a schematic representation of a first embodiment of a plant for the production of a laminate in polymeric material according to the present invention,
- Figure 2 shows a schematic representation of a second embodiment of a plant for the production of a laminate in polymeric material according to the present invention,
- Figure 3 shows the sectional view of a polymeric laminate achievable through the process and the plant according to the present invention,

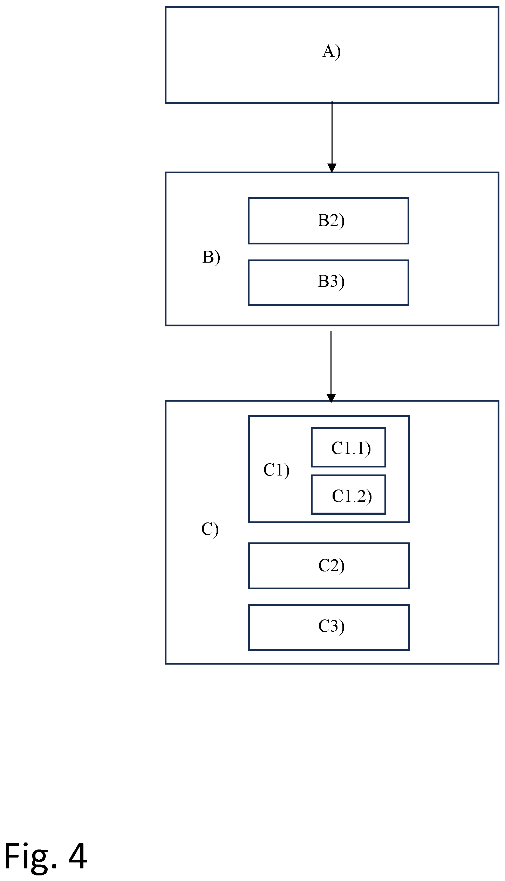

- Figure 4 shows a flowchart of a method according to the present invention.

### DETAILED DESCRIPTION

The present description relates to a process and a plant for the production of a laminate 100 in thermoplastic polymeric material - such as, for example, a panel or a sheet - comprising a first and a second layer 101, 102 spaced apart in a thickness direction S-S and a third embossed layer 103 coupled from opposite sides along the thickness direction S-S to the first and the second layer 101, 102.

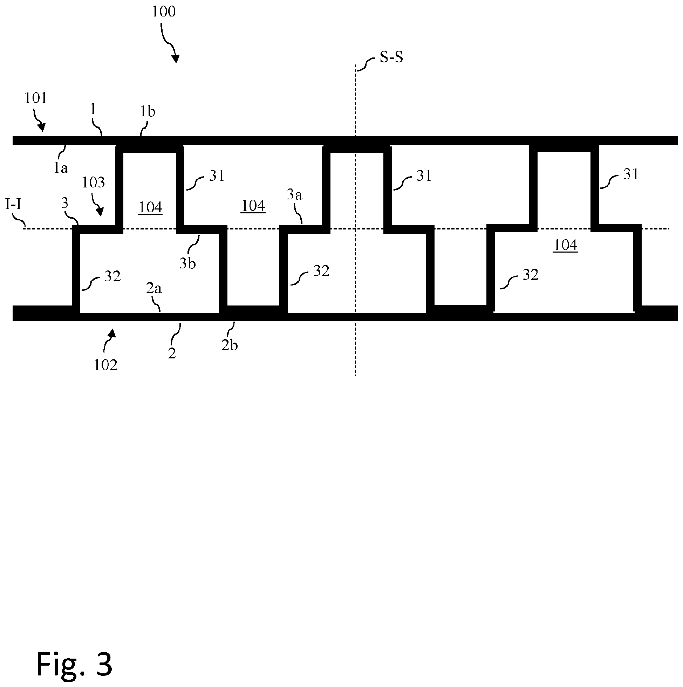

Figure 3 shows an example of a laminate 100 achievable through the process and the plant according to the present description, in which the first and the second layer 101, 102 are flat and coupled to respective embossments 31, 32 (or any other type of protrusion) of the third layer 103.

The laminate 100 can therefore have a honeycomb structure, that is, a structure characterized by a plurality of cells 104 (of any shape) delimited along the thickness direction by the third sheet 103 and by the first sheet 101 or by the second sheet 102. Said cells can be either only filled with air or with specific materials (e.g. insulators) suitable for conferring particular properties to the laminate 100.

According to one aspect, the third layer 103 has a periodic conformation defining embossments 31, 32 on both its faces, achievable for example by a process of thermoforming sheets of thermoformable polymeric material.

In particular, in the embodiment shown in figure 3, the third layer 103 has an intermediate plane I-I and the embossments are divided into a first group (first embossments 31) projecting from one side of the intermediate plane I-I to connect to the first sheet 101, and into a second group (second embossments 32) projecting from the opposite side of the intermediate plane I-I with respect to the first embossments 31 to connect to the second sheet 102.

Preferably, the first and the second embossments 31, 32 alternate along one or more directions of main extension of the laminate which are directed orthogonally to the thickness direction S-S.

Furthermore, preferably, the embossments 31, 32 all have the same geometry.

Each layer 101, 102, 103 of the laminate 100 is made starting from a respective sheet 1, 2, 3 in polymeric material which can be mono-extruded (single-layer) or co-extruded (multi-layer).

It is also good to specify that the laminate 100 may comprise other layers in addition to those described above.

Preferably, the laminate 100 has a flat conformation, that is, it extends mainly in a plane directed orthogonally to the thickness direction S-S.

In the following, the production process of the laminate 100 will first be described, and then the analysis of the plant 10 configured to implement said process will be carried out.

The process first involves feeding a first and a second sheet 1, 2 made of thermoplastic polymeric material (step A), and also a third sheet 3 made of thermoplastic, thermoformable, and heat-sealable polymeric material to the first and the second sheet 1, 2 (step B).

The thermoplastic polymeric materials of the sheets 1, 2 and 3 can be the same or different, provided that they are compatible for heat-sealing.

The sheets 1, 2, 3 can be made with a variety of thermoplastic polymeric materials such as, for example, polypropylene (PP), polyethylene terephthalate (PET), polyethylene (PE), polycarbonate (PC), thermoplastic olefin (TPO), and polyvinyl chloride (PVC).

If the production process of the laminate 100 is a continuous production process, the feeding steps of the sheets A) and B) are performed continuously and contemporaneously.

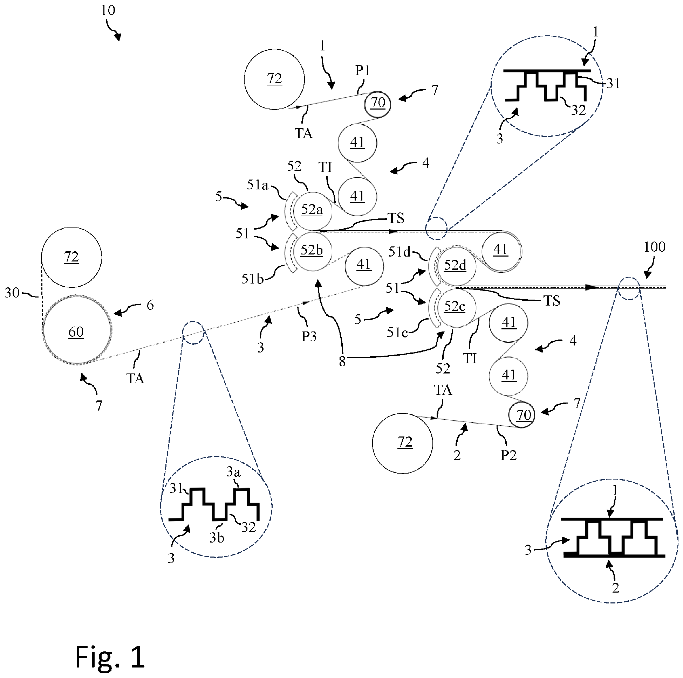

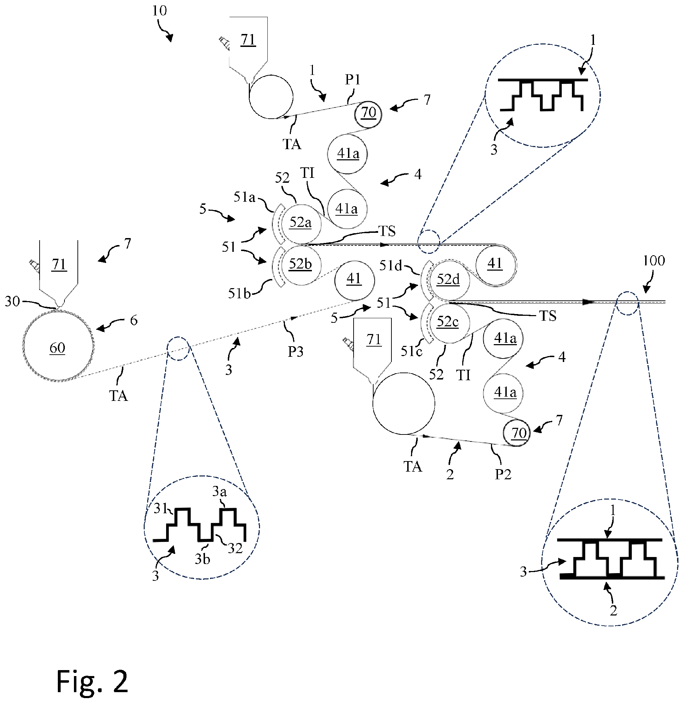

In the embodiments of figures 1 and 2, each sheet 1, 2, 3 is fed continuously along a respective path P1, P2, P3. Moving continuously along the respective paths, the sheets 1, 2, 3 are mutually coupled by means of heat-sealing, thus transforming into the respective layers 101, 102, 103 of the laminate 100.

To ensure a continuous feeding of each sheet 1, 2, 3 it is possible to adopt various solutions. For example, recourse can be had both to the unwinding of reels of prefabricated sheets (figure 1) and to extrusion (figure 2).

To move the sheets 1, 2, 3 continuously along the respective paths P1, P2, P3, known movement systems, such as rollers, can be used.

The first and the second sheet 1, 2 are respectively intended to form the first and the second layer 101, 102 of the laminate 100 and, preferably, are flat.

The third sheet 3 is instead intended for the realization of the third layer 103 and, therefore, has embossments 31, 32 on both its faces. In particular, the third sheet 3 has, on a its first face 3a, first embossments 31 intended to be coupled to the first sheet 1, and, on a its second face 3b, opposite the first, second embossments 32 intended to be coupled to the second sheet 2.

According to an aspect shown in figure 2, the feeding step of the third sheet B) provides for extruding or otherwise providing a substantially flat sheet 30 made of thermoplastic material (sub-step B1) and then thermoforming it to give it the embossed structure described above (sub-step B2).

In the thermoforming sub-step B2, thermoforming members 6 are used - such as, for example, a vacuum and thermo-controlled thermoforming roller 60 - suitable for creating the first and the second embossments 31, 32 on opposite faces of the flat sheet 30. The thermoforming members therefore allow to transform the flat sheet 30 fed in sub-step B1 into the embossed third sheet 3 described above.

Each of the sheets 1, 2 and 3 typically has a thickness greater than 1 mm. However, nothing excludes that they may also have thicknesses of less than 1 mm, thus falling into the category of materials which, in technical jargon, are indicated as "films".

Downstream of the feeding step, the process provides for coupling the first and the second sheet 1, 2 from opposite sides of the third sheet 3 (step C). By coupling with each other, the sheets 1, 2, 3 fed in steps A) and B) are transformed into the respective layers 101, 102, 103 of the laminate 100 which is thus produced.

In particular, in the coupling step C), the process provides for heat-sealing the first and the second sheet 1, 2 respectively to the first and second embossments 31, 32 of the third sheet 3.

To do this, the process first involves heating each sheet 1, 2, 3 from the initial feeding temperature TA up to a sealing temperature TS (sub-step C1).

In the context of the present invention, "sealing temperature" is intended to indicate the temperature (or the temperature window) that allows the first and the second sheet 1, 2 to be heat-sealed to the third sheet 3. The sealing temperature TS is a function of the polymeric material with which the sheets are made; therefore, if the sheets 1, 2, 3 are made of different materials, each sheet will be brought to its respective sealing temperature.

According to an aspect shown in figures 1 and 2, in the sub-step C1), each sheet 1, 2, 3 is heated by respective heating members 4 arranged along a heating section of the path P1, P2, P3 taken by it.

In particular, preferably, each sheet 1, 2, 3 is heated individually by the heating members 4 associated with it. This allows the heating sub-step C1) to be customized for each sheet 1, 2, 3 and to prepare it optimally for heat-sealing. More details regarding the heating members 4 will be provided in a subsequent part of the description.

It is good to specify that, in the context of the present description, "heating members" is intended to indicate any element, device or system configured and intended to actively provide a thermal input to the sheets 1, 2, 3 by means of heat transfer, preferably in a controlled manner, in order to intentionally heat them. The heating members 4 are therefore members configured to actively provide a heat flow to the sheets 1, 2, 3.

After heating the first sheet 1 and the third sheet 3 to the sealing temperature TS, the process provides for bringing the first sheet 1 into contact with the first embossments 31 of the third sheet 3 (sub-step C2). Coming into contact, the first and the third sheet 1, 3 are coupled by heat-sealing.

Similarly, after heating the second sheet 2 and the third sheet 3 to the sealing temperature TS, the process provides for bringing the second sheet 2 into contact with the second embossments 32 of the third sheet 3 (sub-step C3). Coming into contact, the second and the third sheet 1, 3 are coupled by heat-sealing.

It should be specified that, at the moment of contact, the sheets to be heat-sealed must be - at least on their respective surfaces involved in the coupling - at the sealing temperature TS. Therefore, it is important that the sub-steps C2) and C3) are performed immediately downstream of the heating step C1). Obviously, this does not exclude the possibility of continuing to supply heat during the sub-steps C2) and C3).

In the embodiments shown in figures 1 and 2, the paths P1, P2, P3 taken by the films 1, 2, 3 are specially designed to bring the first and the second sheet 1, 2 into contact from opposite sides with the third sheet 3, immediately downstream of the respective heating sections.

According to one aspect, the coupling steps C2) and C3) are performed in succession. If the production process of the laminate 100 is performed continuously, this implies that the coupling of the third sheet 3 to the first and the second sheet 1, 2 occurs at distinct sections of the path P3 taken by the third sheet 3. For example, in the embodiments shown in figures 1 and 2, first the first sheet 1 is brought into contact with the first embossments 31 of the third sheet 3 (sub-step C2) and, only subsequently, the second sheet 2 is brought into contact with the second embossments 32 of the third sheet 3 (sub-step C3) which, therefore, will already be coupled on the opposite side to the first sheet 1.

Attention will now be focused on the heating sub-step C1) which, as highlighted in the state of the art, is fundamental to ensure the success of the heat-sealing.

In the process according to the present description, the heating sub-step C1) is divided into at least two steps performed sequentially. This allows to obtain a better control over the temperature increase of the sheets 1, 2, 3 and, if the production process is continuous, also on the deformations and stretching of the material, so as to prevent or minimize the formation of undesirable internal stresses in the material of the sheets 1, 2, 3.

In detail, the heating sub-step C1) is divided into at least a first heating sub-step C1.1) and a second heating sub-step C1.2), immediately subsequent to the first heating sub-step C1.1).

In the first heating sub-step C1.1), each sheet 1, 2, 3 to be heat-sealed is heated by means of respective first heating members 4 from the initial feeding temperature TA to an intermediate temperature TI, lower than the sealing temperature TS. Therefore, in the first heating sub-step C1.1), the first heating members 4 provide the respective sheets 1, 2, 3 to be heat-sealed with a quantity of heat such as to bring them from the temperature at which they are fed TA to the intermediate temperature TI.

It is good to specify that, just as the feeding temperatures TA and the sealing temperatures TS of the individual sheets 1, 2, 3 can be different, the intermediate temperature TI can also be different for each sheet 1, 2, 3. It is however understood that the intermediate temperature TI associated with each sheet 1, 2, 3 is comprised between the respective feeding and sealing temperatures TA, TS.

In the second heating step C1.2), each sheet 1, 2, 3 to be heat-sealed is heated by means of respective second heating members 5 from the intermediate temperature TI to the sealing temperature TS. Therefore, in the first heating sub-step C1.2), the second heating members 5 provide the respective sheets 1, 2, 3 to be heat-sealed with a quantity of heat such as to make them complete the thermal jump necessary to bring them from the intermediate temperature TI to the sealing temperature TS.

In the embodiments shown in figures 1 and 2, upstream of the sections where the sub-steps C2) and C3) are performed, along the path P1, P2, P3 taken by each sheet 1, 2, 3, respective first heating members 4 and second heating members 5 are sequentially arranged.

During the execution of the process, before the start of sub-step C2), both the first sheet 1 and the third sheet 3 are subjected to a progressive heating, which initially occurs by means of the respective first heating members 4, and subsequently through the respective second heating members 5. Similarly, upstream of sub-step C3), both the second sheet 2 and the third sheet 3 (which may have already been coupled to the first sheet 1) are heated, being subjected to a progressive heating which, also in this case, occurs initially by means of the respective first heating members 4, and subsequently through the respective second heating members 5.

According to one embodiment, in the second heating step C1.2.), at least part of the second heating members 5 provides heat mainly by irradiation to the sheets to be heat-sealed.

The use of infrared radiations allows to increase the surface temperature of the sheets 1, 2, 3 to be heat-sealed more than that of its inner portion. The infrared radiation therefore makes it possible to bring the surfaces of the sheets intended for coupling to the heat-sealing temperature TS and, at the same time, to keep the remaining portion of the material of the sheets to be heat-sealed at a lower temperature. The reduction of the thermal jump of the internal mass of the sheets to be heat-sealed is particularly advantageous, since it allows to reduce, or even completely avoid, the formation of internal stresses that could lead to the deformation of the laminate 100.

To this end, the second heating members 5 can comprise radiating elements 51 configured to emit infrared radiations (e.g. infrared lamps). A part of the radiating elements 51 is configured to irradiate the first face 3a of the third sheet 3 and a first coupling surface 1a of the first sheet 1, intended to be heat-sealed to the first embossments 31, just before sub-step C2). Similarly, another part of the radiating elements 51 is configured to irradiate the second face 3b of the third sheet 3 and a second coupling surface 2a of the second sheet 2, intended to be coupled by heat-sealing to the second embossments 32, just before sub-step C3).

In the embodiments shown in figures 1 and 2, the heating members 5 comprise at least a first infrared lamp 51a and a second infrared lamp 51b respectively configured to irradiate the first coupling surface 1a of the first sheet 1 and the first face 3a of the third sheet 3 upstream of sub-step C2).

Furthermore, in the embodiments shown in figures 1 and 2, the heating members 5 comprise at least a third infrared lamp 51c and a fourth infrared lamp 51d respectively configured to irradiate the second coupling surface 2a of the second sheet 2 and the second face 3b of the third sheet 3 upstream of sub-step C3).

According to one embodiment, in the second heating step C1.2), at least part of the second heating members 5 provides heat mainly by conduction to the sheets to be heat-sealed.

To this end, for example, the second heating members 5 can comprise conductive heating elements 52 configured to provide heat by contact to the sheets 1, 2, 3 to be heat-sealed from the opposite side with respect to the radiating elements 51. By doing so, the conductive heating elements 52 prevent the cross-sections of the sheets 1, 2, 3 from being subjected to high thermal gradients that could induce undesirable stress states in the material.

According to one aspect, the conductive heating elements 52 comprise thermo-controlled rollers configured to contact the sheets 1, 2, 3 from the opposite side of the face/surface irradiated by the radiating elements 51.

According to a further aspect, the conductive heating elements 52 and the radiating elements 51 provide heat simultaneously to the sheets 1, 2, 3 to be heat-sealed.

In the embodiments shown in figures 1 and 2, the conductive heating elements 52 comprise at least a first heating roller 52a and a second heating roller 52b respectively configured to come into contact and heat a first free surface 1b of the first sheet 1 opposite the first coupling surface 1a and the second face 3b of the third sheet 3, upstream of sub-step C2).

Furthermore, in the embodiments shown in figures 1 and 2, the conductive heating elements 52 comprise at least a third heating roller 52c and a fourth heating roller 52d respectively configured to come into contact and heat a second free surface 2b of the second sheet 2 opposite the second coupling surface 2a and the first face 3a of the third sheet - or, if sub-step C1) has already been performed, the first free surface 1b of the first sheet 1 -, upstream of sub-step C3).

It is good to specify that in the context of the present invention the term "heating roller" is intended to indicate a thermo-controlled rotating cylinder, whose cylindrical surface is configured to receive and abut a face/surface of the sheets 1, 2, 3 to be heat-sealed.

The use of heating rollers as conductive heating elements 52 is particularly advantageous in that, in addition to providing heat to the sheets to be heat-sealed, they can be used to bring them mutually closer and into contact. This allows to ensure the execution of steps C2) and C3) immediately downstream of the second heating sub-step C1.2), thus preventing cooling of the sheets to be heat-sealed that could affect the heat-sealing.

According to one embodiment, the first heating members 4 are configured to heat the sheets 1, 2, 3 to be heat-sealed by conduction.

The use of conduction to perform the first part of the heating sub-step C1) allows to heat substantially uniformly the cross-section of the sheets 1, 2, 3 to be heat-sealed to the intermediate temperature TI. In this regard, it is highlighted that heating by conduction, unlike irradiation which concentrates the thermal energy on the surface, guarantees a homogeneous distribution of heat within the mass of the sheets.

In the embodiments shown in figures 1 and 2, the first heating members 4 comprise conductive heating elements 41, configured to come into contact and heat: the first embossments 31 of the third sheet 3 and both surfaces 1a, 1b of the first sheet, upstream of sub-step C2); as well as the second embossments 32 and both surfaces 2a, 2b of the second sheet 2 upstream of sub-step C3).

The conductive heating elements 41 of the first heating members 4, similarly to those of the second heating members 5, can comprise heating rollers.

According to one aspect, the first heating members associated with the first and the second sheet 1, 2 comprise a pair of heating rollers 41a, each configured to come into contact with one of the surfaces of the first and the second sheet 1, 2.

In detail, in the embodiments shown in figures 1 and 2, the pair of heating rollers 41a are arranged along the path P1, P2 taken by the first and the second sheet 1, 2 so as to come into contact and heat first the free surfaces 1b, 2b and subsequently the coupling surfaces 1a, 2a of the first and the second sheet. By doing so, at the exit of the first heating sub-step C1.1), the first and the second sheet 1, 2 will have the coupling surfaces 1a, 2a, i.e. the surfaces that will subsequently be heat-sealed to the third sheet 3, at a slightly higher temperature with respect to their opposite free surfaces 1b, 2b. Advantageously, this reduces the heat to be supplied in the subsequent second heating sub-step C1.2) to the coupling surfaces 1a, 2a to bring them to the sealing temperature TS.

The present description also relates to a plant 10 for the production of a laminate 100 according to the process described above.

As shown in figures 1 and 2, said plant 10 comprises feeding members 7 configured to continuously feed the first, the second, and the third sheet 1, 2, 3 independently.

For each sheet 1, 2, 3 to be moved, said feeding members 7 can for example comprise motorization means (not shown in the figures) configured to rotate a rubberized cylinder 70 on whose surface the sheet 1, 2, 3 to be moved rests. In use, by controlling the rotation of the rubberized cylinders 70, the sheets 1, 2, 3 are fed along the respective paths P1, P2, P3 in a controlled manner.

In the embodiment shown in figure 2, the feeding members 7 also comprise at least three extrusion groups 71, each configured to extrude a respective sheet 1, 2, 3.

In the embodiment shown in figure 1, the feeding members 7 comprise reels 72 of polymeric sheets that can be gradually unwound to feed the sheets 1, 2, 3 along the respective paths P1, P2, P3.

Downstream of the extrusion group 71 or the reel 72 associated with the third sheet 3, thermoforming members 6 can be arranged, suitable for creating the first and the second embossments 31, 32 on opposite faces of the extruded flat sheet 30. The thermoforming members 6 are therefore configured to thermoform into an embossed sheet the flat sheet 30 extruded from one of the extrusion groups 71.

According to one aspect, the thermoforming members 60 comprise a vacuum and thermo-controlled thermoforming roller 60 which can also be controlled in rotation and act as a feeding member 7 for the third film 3.

In alternative embodiments, the thermoforming members 60 may also comprise a pair of counter-rotating rollers (not shown in the accompanying figures) or any other means usable to thermoform embossments (bubbles) on a polymeric sheet.

The plant 10 further comprises first and second heating members 4, 5 configured to increase the temperature of the fed sheets 1, 2, 3, in order to allow their coupling by heat-sealing.

In particular, according to one aspect, the plant 10 comprises first and second heating members 4, 5 associated with each fed sheet 1, 2, 3, so as to be able to heat it independently from the other sheets 1, 2, 3.

The first heating members 4 are configured to provide heat to each sheet 1, 2, 3 in the first heating sub-step C1.1), to increase its temperature from the initial feeding temperature TA up to the intermediate temperature TI.

Preferably, the first heating members 4 comprise the conductive heating elements 41 described above.

The second heating members 5 are configured to provide heat to each sheet 1, 2, 3 in the first heating sub-step C1.2), to increase its temperature from the initial intermediate temperature TI up to the sealing temperature TS.

The second heating members 5 are therefore arranged downstream of the respective first heating members 4, so as to receive as input the sheets 1, 2, 3 exiting from the latter and complete their heating up to reaching the sealing temperature TS.

Preferably, the second heating members 5 comprise the radiating elements 51 - and, possibly, also the conductive heating elements 52 - described previously.

The plant 10 also comprises coupling members 8 arranged downstream of the second heating members 5 and configured to bring the first sheet 1 and the second sheet 2 respectively into contact with the first embossments 31 and the second embossments 32 of the third sheet, to perform the sub-steps C2) and C3).

According to one aspect, the coupling members 8 comprise: a first pair of counter-rotating cylinders which, by rotating around respective rotation axes directed in parallel, are configured to bring the first sheet 1 into contact with the first embossments 31 of the third sheet 3; and a second pair of counter-rotating cylinders which, by rotating around respective rotation axes directed in parallel, are configured to bring the second sheet 2 into contact with the second embossments 32 of the third sheet 3.

Said counter-rotating cylinders are preferably thermo-controlled.

Obviously, a person skilled in the art may make numerous equivalent modifications to the variants described above, without thereby departing from the scope of protection defined by the appended claims.

## Claims

1. A process for the production of a laminate (100), wherein:
- the laminate (100) comprises a first layer (101) and a second layer (102) spaced apart along a thickness direction (S-S), and a third layer (103) embossed and coupled from opposite sides along the thickness direction (S-S) to the first layer (101) and the second layer (102),
- the process involves the steps of:
A) feeding a first sheet (1) and a second sheet (2) made of thermoplastic polymeric material, intended to form the first layer (101) and the second layer (102) of the laminate (100), respectively,
B) feeding a third sheet (3) made of thermoplastic polymeric material heat-sealable to the first sheet (1) and the second sheet (2) and having first embossments (31) on a first face (3a) and second embossments (32) on a second face (3b) opposite the first face (3a), the third sheet (3) being intended to form the third layer (103) of the laminate (100),
C) coupling the first sheet (1) and the second sheet (2) from opposite sides of the third sheet (3) by heat-sealing the first sheet (1) to the first embossments (31) and the second sheet (2) to the second embossments (32), said step C) of coupling comprising the sub-steps of:
C1) heating the first sheet (1), the second sheet (2) and the third sheet (3) up to a sealing temperature (TS) adapted to allow the first sheet (1) and the second sheet (2) to be coupled to the third sheet (3) by heat-sealing,
C2) contacting the first sheet (1) with the first embossments (31) of the third sheet (3) to heat-seal the first sheet (1) to the third sheet (3),
C3) contacting the second sheet (2) with the second embossments (32) of the third sheet (3) to heat-seal the second sheet (2) to the third sheet (3),
**characterized in that** the sub-step C1) of heating the first sheet (1), the second sheet (2), and the third sheet (3) is divided into:
C1.1) a first heating sub-step , wherein first heating members (4) provide heat to the first sheet (1), the second sheet (2), and the third sheet (3) to increase the temperature of the first sheet (1), the second sheet (2), and the third sheet (3) up to an intermediate temperature (TI), said intermediate temperature (TI) being lower than the sealing temperature (TS) and higher than the temperature at which the first sheet (1), the second sheet (2), and the third sheet (3) are respectively fed in steps A) and B),
C1.2) a second heating sub-step, subsequent to the first heating sub-step, wherein second heating members (5) provide heat to the first sheet (1), the second sheet (2), and the third sheet (3) to increase the temperature of the first sheet (1), the second sheet (2) and the third sheet (3) from the intermediate temperature (TI) to the sealing temperature (TS).

2. The process according to claim 1, wherein in the second heating sub-step C1.2) at least part of the second heating members (5) provide heat to the first sheet (1), the second sheet (2) and the third sheet (3) mainly by irradiation.

3. The process according to claim 2, wherein the second heating members (5) comprise radiating elements (51) configured to emit infrared radiations and to bring to the sealing temperature (TS):
- the first face (3a) of the third sheet (3) and a first coupling surface (1a) of the first sheet (1) intended to be coupled by heat-sealing to the first embossments (31) of the third sheet (3), before sub-step C2),
- the second face (3b) of the third sheet (3) and a second coupling surface (2a) of the second sheet (2) intended to be coupled by heat-sealing to the second embossments (32) of the third sheet (3), before sub-step C3).

4. The process according to claim 3, wherein the second heating members (5) comprise conductive heating elements (52) configured to provide heat by conduction simultaneously with the radiating elements (50) by contacting the first sheet (1), the second sheet (2) and the third sheet (3) from the opposite side with respect to the radiating elements (51).

5. The process according to any one of the preceding claims, wherein in the first heating sub-step C1.1) at least part of the first heating members (4) provide heat to the first sheet (1), the second sheet (2) and the third sheet (3) mainly by conduction.

6. The process according to claim 5, wherein the first heating members (4) comprise further conductive heating elements (41) which:
- upstream of sub-step C2), are configured to contact from opposite sides the first sheet (1) and the first embossments (31) of the third sheet (3),
- upstream of sub-step C3), are configured to contact from opposite sides the second sheet (2) and the second embossments (32) of the third sheet (3).

7. The process according to any one of the preceding claims, wherein steps C2) and C3) are carried out sequentially.

8. The process according to any one of the preceding claims, wherein the step B) of feeding the third sheet involves the sub-steps of:
B1) extruding or providing a plane sheet (30) made of thermoplastic material,
B2) thermoforming the plane sheet (30) by means of thermoforming members (6) adapted to make on opposite faces of the plane sheet (30) the first embossments (31) and the second embossments (32) so as to transform the plane sheet (30) into the third sheet (3).

9. A plant (10) for the production of a laminate (100) according to the process according to any one of the preceding claims, the plant (10) comprising:
- feeding members (7) configured to continuously feed the first sheet (1), the second sheet (2), and the third sheet (3),
- first heating members (4) configured to provide heat to the first sheet (1), the second sheet (2), and the third sheet (3) fed, to increase the temperature of the first sheet (1), the second sheet (2), and the third sheet (3) up to the intermediate temperature (TI),
- second heating members (5) arranged downstream of the first heating members (4) and configured to provide heat to the first sheet (1), the second sheet (2), and the third sheet (3) to increase the temperature of the first sheet (1), the second sheet (2) and the third sheet (3) from the intermediate temperature (TI) to the sealing temperature (TS),
- coupling members (8) arranged downstream of the second heating members (5) and configured to contact the first sheet (1) and the second sheet (2) with the first embossments (31) and the second embossments (32) of the third sheet (3), respectively.

10. The plant according to claim 9, wherein the second heating members (5) comprise radiating elements (51) configured to emit infrared radiations and to heat to the sealing temperature (TS):
- the first face (3a) of the third sheet (3) and a first coupling surface (1a) of the first sheet (1) intended to be coupled by heat-sealing to the first embossments (31) of the third sheet (3), before contacting the first sheet (1) with the first embossments (31) of the third sheet (3),
- the second face (3b) of the third sheet (3) and a second coupling surface (2a) of the second sheet (2) intended to be coupled by heat-sealing to the second embossments (32) of the third sheet (3) before contacting the second sheet (2) with the second embossments (32) of the third sheet (3).
